Europäisches Patentamt

European Patent Office

Office européen des brevets

(11) Publication number: **0 329 878**
**A1**

## (12) EUROPEAN PATENT APPLICATION

(21) Application number: 88301662.8

(22) Date of filing: 26.02.88

(51) Int. Cl.⁴: **B62B 7/00 , B62B 9/28**

(43) Date of publication of application:
30.08.89 Bulletin 89/35

(84) Designated Contracting States:
DE FR GB IT NL SE

(71) Applicant: **Wynens, Barbara M.**
**4195 Wellington Hills Drive**
**Snellville Georgia 30278(US)**

(72) Inventor: **Wynens, Barbara M.**
**4195 Wellington Hills Drive**
**Snellville Georgia 30278(US)**

(74) Representative: **Hepworth, John Malcolm**
**J.M. Hepworth & Co. 36 Regent Place**
**Rugby Warwickshire CV21 2PN(GB)**

(54) Tandem two-seat child's push-chair.

(57) A two seater child's push-chair (10) made of tubular material having an elongate frame (11) supporting two seats (16, 17) for small children in tandem in which the lower front seat (16) and the upper rear seat (17) being vertically disposed with respect to one another, wherein the front seat faces toward a forward portion of the push-chair and the upper rear seat faces in the opposite direction.

Fig.1

EP 0 329 878 A1

## TANDEM TWO SEAT CHILD'S PUSH-CHAIR

The present invention relates to a push-chair for use with children and more particularly to a push-chair which is designed to be utilized for two children at the same time, wherein the two seats for the respective children are mounted in tandem fore and aft along the centre line of the push-chair with one seat facing forward and the other seat facing rearwardly, and each seat being spaced vertically with respect to the other.

In the past, a great number of childrens' push-chairs have found their way onto the market and generally these push-chairs are of tubular metal construction with provision for one or more children to be seated therein. The most common seating arrangement is to have the child sitting in the push-chair facing forward, or in the case of a dual seated push-chair, the children are normally seated side-by-side facing forward. However, this poses a problem in the case of the two seated push-chair since if the children are seated side-by-side, the width of the push- chair becomes very unwieldy in tight spaces or in shopping areas where pedestrian traffic or construction dictate tight spaces.

In addition, the dual seated push-chairs of the prior art are complicated and require a mechanism of some sort associated with the push-chair to fold it to a configuration which is easily transportable. In addition to being of large size, the push-chairs of the prior art are generally cumbersome and weigh a considerable amount, which also makes these push-chairs difficult to manoeuvre and to transport.

An advantage of the present invention is that it provides a two-seat child's push-chair which is of compact design, is of light weight and can be manufactured quite easily at relatively low cost. In addition, the present push-chair is durable and is extremely safe in normal use.

The invention provides a push-chair for children comprising a base frame having front and rear wheel sets, an upright support structure attached to the frame, characterized by a first lower forward facing seat affixed to the frame, a second raised rearward facing seat affixed to the frame, said second seat being mounted above and rearwardly of the first seat and facing in the opposite direction to that of the first seat. The tubular seat support frame for each seat may be of a common structure to the two seats, wherein the seat back of each seat is attached to the common support frame to provide for economy in manufacture. The tubular base support frame may provide for a mesh flooring member which also presents a foot support for the lower seat and in the rear thereof, there may be provided a container of preferably mesh construction which offers a foot support for the rear seat and, to provide storage capacity on the push-chair for packages and other small articles.

A push-chair embodying the invention will now be described, by way of example, with reference to the accompanying drawings, in which:-

FIGURE 1 is an overall perspective view of the child's push-chair of the present invention;

FIGURE 2 is a top plan view of the push-chair;

FIGURE 3 is a side elevation view; and

FIGURE 4 is a front elevation view of the child's push-chair of the present invention.

Referring to the drawings wherein like reference characters designate corresponding parts throughout the several figures, the tandem two seat child's push-chair of the present invention is indicated by the numeral 10. The push-chair 10 comprises a generally rectangular tubular base support frame 11 to which there is affixed a pair of rear main wheels 12 interconnected and affixed to the push-chair by means of a rear axle 13. The rear axle 13 is secured to the tubular base support frame 11 by any suitable means well known in the art. In the forward portion of the support frame 11, there is a pair of swivel action front wheels 14 attached to the support frame 11 by means of generally U-shaped wheel mounting brackets 15 suitably swivelled to the base support frame 11. Thus, the main support frame is furnished with front and rear wheel sets.

Positioned vertically from the base support frame 11 is a lower seat and an upper seat respectively indicated generally by numerals 16 and 17. Supporting the upper and lower seats to the base support frame 11 are a pair of rear main support members 18, a tubular seat support frame 19, which includes a pair of upward seat support members 21, and a pair of front main support members 22.

To properly brace and interconnect the rear main support members 18, the tubular seat support frame 19, and the front main support members 22 are respective pairs of rear angle braces 23 and forward angle braces 24. Providing lateral bracing to the tubular seat support frame 19 are a pair of cross-braces 25 interconnected between the vertical seat support members 21.

Attached to the rear main support members 18 is a generally U-shaped manoevring handle 26, which may, by preference, be so situated as to be parallel to the tubular base support frame 11 and the surface upon which the push-chair is to be rolled.

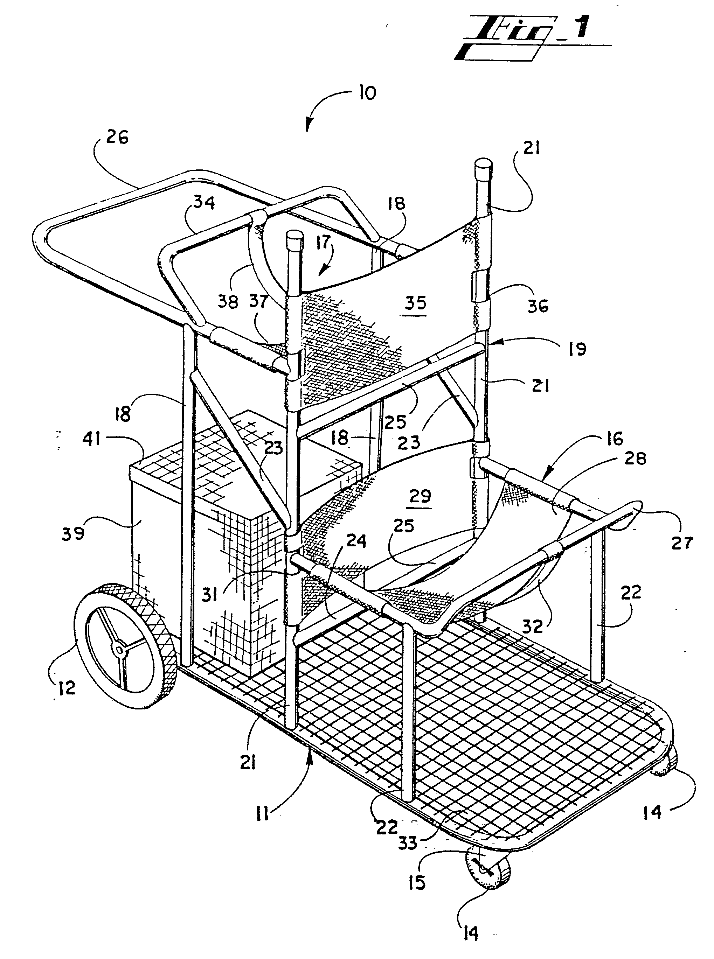

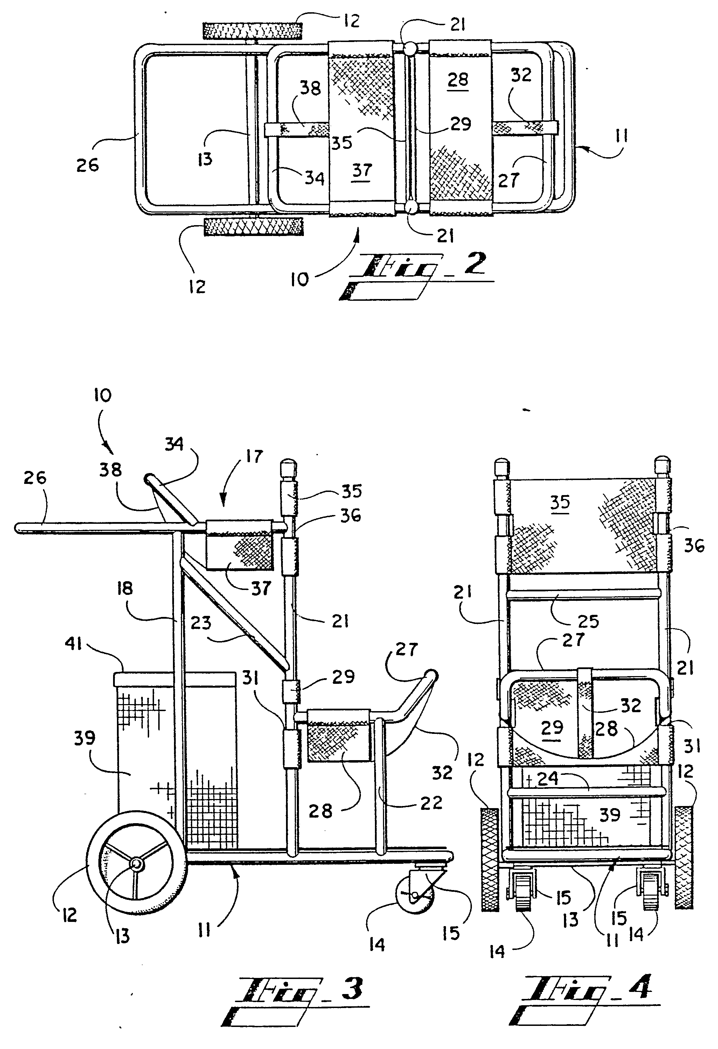

The lower seat 16 generally comprises a lower seat support frame 27 which extends from one seat support member 21 around in a U-shaped configuration to the other seat support member 21 and is held in proper alignment by the front main support members 22. The lower seat itself comprises a lower saddle seat 28 and a lower seat back 29 as can be easily seen from the drawings, and especially in Figure 1. The lower back seat 29 is attached around each seat support member 21 and has a cutout portion 31 which is designed to allow the seat back material to be affixed to the seat support member 21 and fit around the lower seat support frame 27 where it intersects with the seat support member 21. The saddle seat 28 is affixed around the lower seat support frame 27 in a loosely-fitted configuration to allow a comfortable seating arrangement for the child. The front portion of the seat 28 is then attached to the lower seat support frame 27 in its forward-most position by the lower seat frontal support strap 32.

The general purpose of the strap 32 is to provide means for maintaining the child in the seat 28 so that the child does not fall forward through the seat onto the mesh flooring member 33, which also doubles as a support for the lower seat 16. Of course, the lower seat back 29 provides support for the back of the child as the child sits in the seat 16.

The upper seat 17, much like the lower seat, comprises an upper seat support frame 34, which interconnects to the seat support member 21 as illustrated in the figures, and much in the same manner as the lower seat support frame 27. The upper seat also includes an upper seat back 35 of suitable material attached to the seat support members 21, with cutout portions 36 to allow the upper support frame 34 to attach, as shown, to the seat support members 21.

The upper saddle seat portion is of suitable material and is indicated by numeral 37, wherein the material is suitably attached around the upper seat support frame 34 in the same manner as shown in the lower seat. Similarly, the upper seat frontal support strap 38 runs from the forward edge of the seat 37 in a loose configuration and attaches to the forward edge of the upper seat support frame 34, and like in the lower seat 16, strap 38 secures the child in the seat and prevents the child from falling through the opening in front of the seat.

Since it is quite probable, when utilizing a push-chair to effect transportation of small children, the user would like to have room for storage of personal effects and packages, there is provided loosely attached to the mesh flooring 33, a container 39, having a removable or hinged cover 41. It is anticipated that the size of the container would be sufficient so as to provide a convenient foot support for the child sitting in the upper seat 17.

It is to be noted that the materials used in manufacture of the push-chair 10 may be of many varieties, including tubular aluminium or even moulded plastic tubing. The rest of the materials utilized in the push-chair should be obvious to anyong skilled in the art and are common materials used in everyday commerce.

## Claims

1. A push-chair for children comprising a base frame having front and rear wheel sets, an upright support structure attached to the frame, characterized by a first lower forward facing seat affixed to the frame, a second raised rearward facing seat affixed to the frame, said second seat being mounted above and rearwardly of the first seat and facing in the opposite direction to that of the first seat.

2. A push-chair according to claim 1, further characterised in that said upright support structure comprises a common support member for the seat backs of both the first and second seats

3. A push-chair according to claim 1 or claim 2, further characterised in that said upright support structure includes a pair of spaced apart upstanding support legs attached to the base frame in that said first and second seats are affixed to the base frame by upright support legs aligned with the support legs of said common support structure.

4. A push-chair according to claim 3, further characterised in that the first lower seat includes a generally U-shaped seat support frame, a flexible saddle seat attached to each opposed limb of the seat support frame and a frontal seat strap attached to the forward edge of the saddle seat and to the connecting leg between the limbs of the lower seat support frame, and a flexible lower seat back having opposed ends attached to the respective spaced apart upstanding legs of the upright support structure, thereby forming a seat back for the first lower forward facing seat.

5. A push-chair according to claim 3 or claim 4, further characterised in that the second raised seat includes a generally U-shaped seat support frame, a flexible saddle seat attached to each opposed limb of the seat support frame and a frontal seat strap attached to the forward edge of the saddle seat and to the connecting leg between the limbs of the lower seat support frame, and a flexible lower seat back having opposed ends attached to the respective spaced apart upstanding legs of the upright support structure, thereby forming a seat back for said second rearward seat means.

6. A push-chair according to any of the preceding claims, further characterised in that the base frame includes a flooring to give a foot support platform for the user of the first lower seat.

7. A push-chair according to claim 6, further characterised in that the flooring comprises an open-weave mesh material which substantially fills the base frame.

8. A push-chair according to claim 6 or claim 7, further characterised in that a container is disposed of said flooring such as to give a foot support platform for the user of the second raised seat.

9. A push-chair for children comprising a forward portion and a rearward portion,

a generally rectangular frame having a longitudinal axis along a centreline transversing the major length direction of the rectangular frame,

rear wheel means integral with the frame at the rearward portion,

front wheel means integral with the frame at the forward portion,

flooring means overlying the rectangular frame,

a first lower forward facing seat means affixed to the rectangular frame,

a second raised rearward facing seat means affixed to the rectangular frame,

a vertically disposed support frame being the common support member for a portion of both the first and second seat means, said support member comprising a pair of spaced apart upstanding legs,

handle means affixed to the second seat means, and container means removably positioned to the flooring means on the rearward portion thereof.

Fig_1

EP 0 329 878 A1

*Fig_2*

*Fig_3*

*Fig_4*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 309 101  (C. ROMAY) <br> * Figures * <br> --- | 1,4,6-9 | B 62 B    7/00 <br> B 62 B    9/28 |
| A | US-A-2 769 482  (H.O. CARLSON) <br> * Figures * <br> --- | 1,3,4,6 ,9 | |
| A | US-A-2 796 155  (C.T. CABLER) <br> * Figures * <br> --- | 9 | |
| E | US-A-4 728 112  (B.M. WYNENS) <br> * Whole document * <br> ----- | 1-9 | |

TECHNICAL FIELDS
SEARCHED (Int. Cl.4)

B 62 B

The present search report has been drawn up for all claims

| Place of search | Date of completion of the search | Examiner |
|---|---|---|
| THE HAGUE | 17-10-1988 | FRANKS B.G. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................

& : member of the same patent family, corresponding
    document